# EUROPÄISCHE PATENTANMELDUNG

(11) **EP 2 532 468 A2**
(43) Veröffentlichungstag der Anmeldung: **12.12.2012**
(21) Anmeldenummer: 12167969.0
(22) Anmeldetag: 15.05.2012
(51) Int. Cl.: B23K 26/00, B23K 26/08

(54) **Bogenfalzmaschine mit Laser und Verfahren zur Vorbereitung eines Bogens**

(30) Priorität: 10.06.2011 DE 102011103977
(71) Anmelder: Heidelberger Druckmaschinen AG, 69115 Heidelberg (DE)
(72) Erfinder: Beier Dr., Bernard, 68526 Ladenburg (DE); Filsinger, Karl-Heinz, 69168 Wiesloch (DE); Temming, Stefan, 59348 Lüdinghause (DE)

(57) **Zusammenfassung**

Die Erfindung betrifft eine Bogenfalzmaschine (100) mit Laser und ein Verfahren zur Vorbereitung eines Bogens (10), der von einem Bogenstapel (6) über eine Bogentransportvorrichtung (2) einer Falzstation (3) zugeführt wird.

Die Bogenfalzmaschine besitzt eine Einrichtung (4) zur Bogenvorbereitung, welche mindestens ein Bearbeitungswerkzeug (20) aufweist zur Bearbeitung eines jeweiligen Bogens in Bewegung, wobei das mindestens eine Bearbeitungswerkzeug einen Laser besitzt, beispielsweise ein Laserarray (22).

Beim Verfahren zur Vorbereitung eines Bogens (10) für einen nachfolgenden Falzprozess wird ein jeweiliger Bogen von einem Laser durch zumindest teilweises Vaporisieren des Bogenmaterials gerillt und/oder geschnitten und/oder gestanzt und/oder perforiert.

## Beschreibung

Die Erfindung betrifft eine Bogenfalzmaschine gemäß Anspruch 1 und ein Verfahren zur Vorbereitung eines Bogens für einen nachfolgenden Falzprozess gemäß Anspruch 7.

### Stand der Technik

Die EP 1 475 334 A1 zeigt eine Falzmaschine mit einem Messerwellenpaar. Die Messerwellen sind parallel zueinander zwischen zwei im Abstand zueinander angeordneten Seitenwänden der Falzmaschine gelagert. Um gefalzte Papierbogen senkrecht zu einer Falzlinie, d. h. in Bogenlaufrichtung schneiden, perforieren, krimpen, rillen, nuten oder pressen zu können, sind den Falzwalzen eines Falzwerks Messerwellenpaare vor- bzw. nachgelagert. Nachfolgend werden die Begriffe Rillen und Nuten synonym verwendet. Gemeint ist eine Materialschwächung des Bogenmaterials durch Entfernen von Material wodurch der Querschnitt reduziert wird.

Bei den Messerwellen handelt es sich in der Regel um Messerwellenpaare, bei denen die eine Messerwelle mit Werkzeugen und die andere Messerwelle mit Gegenwerkzeugen bestückt ist. Die Werkzeuge sind auf Werkzeughaltern angebracht, welche auf die Messerwellen aufschiebbar sind.

Eine derartige Vorbereitung von zu falzenden Bogen ist erforderlich, um an den Sollpositionen der Falzbrüche eine Materialschwächung zu bewirken und somit sicherzustellen, dass die Falzbrüche tatsächlich an der vorgesehenen Position ausgeführt werden. Besonders bei dickeren Produkten kann es sonst zur Abweichung der Position der Falzbrüche kommen, was in Falzprodukten von geringerer Qualität resultiert.

Nachteilig an der Verwendung von Messerwellen ist zum einen deren aufwändige Einstellung auf die richtige Position. Bei Auftragswechseln kann es erforderlich sein, die Messerwellen aus den Falzmaschinen auszubauen, um zusätzliche Messerhalter auf die Messerwellen aufschieben zu können.

Weiter nachteilig ist, dass durch einer Taschenfalzstation vorgelagerte Messerwellen keine Falzvorbereitung für die in dieser Taschenfalzstation auszuführenden Falzbrüche vorgenommen werden kann. Dies ist darin begründet, dass durch die Messer der Messerwellen nur in Transportrichtung Schnitt- oder Perforations- oder Rilllinien erzeugt werden können, während die Falzbrüche senkrecht zur Transportrichtung ausgerichtet sind. Damit ist es durch die bekannten Messerwellen nur möglich eine Falzvorbereitung für in einer zweiten Taschenfalzstation auszuführende Falzbrüche vorzunehmen, wenn die zweite Taschenfalzstation in einem Winkel von 90° zur ersten Taschenfalzstation angeordnet ist. Aus der DE 44 42 411 B4 ist es bekannt, dass Bogen während des Transports durch eine Druckmaschine, insbesondere direkt vor dem Ausleger, von einer Lasereinheit bearbeitet werden, nämlich geschnitten, perforiert oder gerillt. Dabei arbeiten bekannte Laser zur Papierbearbeitung im Infrarot (IR)-Bereich, siehe DE 10 2008 030 457 A1

Aus der DE 198 58 330 A1 geht eine Einrichtung zum Zuschneiden einer Materialbahn in Einzelbogen hervor. Die Schneideinrichtung, welche als Laserlichtquelle ausgeführt sein kann, ist auf einem Schlitten angeordnet, welcher auf einer Kurve sowohl in Transportrichtung als auch quer dazu bewegt wird. Die Geschwindigkeitskomponente in Transportrichtung entspricht dabei der Transportgeschwindigkeit des Bedruckstoffs, sodass ein Schnitt rechtwinklig zu den Bahnkanten erzeugt wird.

In der DE 327 613 PS wird beschrieben, dass bei zu falzenden Bogen an den Kreuzungspunkten von Falzbrüchen vorab kleine Ausschnitte gestanzt oder geschnitten werden können, was die Qualität der Falzbrüche erhöht.

### Aufgabenstellung

Aufgabe der vorliegenden Erfindung ist es, eine Bogenfalzmaschine zu schaffen, und ein Verfahren zur Vorbereitung eines Bogens für einen nachfolgenden Falzprozess zu beschreiben, wobei die Nachteile des Standes der Technik zumindest reduziert werden.

Gelöst wird diese Aufgabe durch eine Bogenfalzmaschine mit Merkmalen von Anspruch 1 und durch ein Verfahren zur Vorbereitung eines Bogens für einen nachfolgenden Falzprozess mit den Merkmalen von Anspruch 7.

Die erfindungsgemäße Bogenfalzmaschine zum Falzen von Bogen aus Papier, Pappe, Karton und papierhaltigen Materialien besitzt eine Maschinensteuerung, eine Bogentransporteinrichtung zum Transportieren der Bogen in einer Bogentransportrichtung, mindestens eine Falzstation, welche als Taschenfalzstation oder Schwertfalzstation ausgebildet sein kann, und eine stromaufwärtig der mindestens einen Falzstation angeordnete Einrichtung zur Bogenvorbereitung, welche mindestens ein Bearbeitungswerkzeug aufweist zur Bearbeitung eines jeweiligen Bogens in Bewegung. Bei der Bearbeitung handelt es sich dabei insbesondere um Rillen, Schneiden, Stanzen (Ausschneiden) und/oder Perforieren eines jeweiligen Bogens. In vorteilhafter Weise besitzt das mindestens eine Bearbeitungswerkzeug einen Laser, d.h. eine Laserlichtquelle. Der Lasereinheit ist eine Steuereinheit (Maschinensteuerung) zugeordnet, um die erforderlichen Betriebsparameter der einzelnen Laserquellen einzustellen wie z.B. Ausgangsleistung, Zeitpunkt der Strahlung, Taktung bei gepulstem Betrieb.

Schnitt, Beschnitt, Ausschnitt, Perforation bzw. Rillung meinen dabei das Ergebnis der Bearbeitung durch die Lasereinheit des Bearbeitungswerkzeuges. Während bei Schnitt (incl. Beschnitt, Ausschnitt und Perforation) Bogenmaterial über die ganze Stärke des Bogens (Bogendicke) entfernt wird, wird beim Rillen nur ein Teil des Bogenmaterials entfernt und der Bogen an dieser Stelle geschwächt.

Erfindungsgemäß strahlt der Laser eine Strahlung im ultravioletten Bereich aus. Die Strahlung kann dabei insbesondere im UV-A-Bereich liegen, d.h. eine Wellenlänge von ca. 380 bis 315 Nanometern aufweisen, oder im UV-B-Bereich, d.h. eine Wellenlänge von ca. 315 bis 280 Nanometern aufweisen, oder im UV-C-FUV-Bereich liegen, d.h. eine Wellenlänge von ca. 280 bis 200 Nanometern aufweisen. Versuche haben ergeben, dass für die Bearbeitung von Papier eine Strahlung im letztgenannten Wellenbereich besonders vielversprechende Ergebnisse liefert.

Durch das Vorsehen der Laserlichtquelle wird eine einfache Bearbeitung eines jeweiligen Bogens ermöglicht, da der Laser einfach anzusteuern ist und eine komplizierte und aufwändige Einstellung von Messerwellen entfallen kann. Auch ist es durch die Verwendung eines Lasers als Bearbeitungswerkzeug möglich, Rill-, Perforations- und Schnittlinien quer zur Bogentransportrichtung auszuführen.

In einer vorteilhaften Weiterbildung der erfindungsgemäßen Bogenfalzmaschine ist der Laser gepulst betreibbar, insbesondere kurzpulsig, als Piko- oder Nanosekundenlaser. Für die Vorteile des kurzpulsigen Betriebs eines Lasers wird verwiesen auf die DE 101 28 813 B4.

Für die Ausbildung des Bearbeitungswerkzeugs der Bogenfalzmaschine sind verschiedene Ausführungsvarianten möglich, welche alle gleichermaßen als vorteilhaft erachtet werden: gemäß einer ersten Ausführungsvariante ist das mindestens eine Bearbeitungswerkzeug als Laserzeile ausgebildet, d.h. als Balken bzw. Barren, welcher eine Mehrzahl von aneinandergereihten Laserdioden aufweisen kann. In einer zweiten Ausführungsvariante wird das mindestens eine Bearbeitungswerkzeug von einem zweidimensionalen, ortsfesten, d.h. gestellfesten, Laserarray gebildet. In einer dritten Ausführungsvariante weist das mindestens eine Bearbeitungswerkzeug einen auf Schienen beweglich geführten Laserkopf auf oder eine Laserquelle und einen ansteuerbaren, beweglichen Umlenkspiegel zum Leiten des Laserstrahls auf einen jeweiligen Bogen auf. Eine solche Einrichtung wird auch als Galvohead bzw. Mehrachsen-Galvokopf bezeichnet.

Erfindungsgemäß sendet der Laser Strahlung im ultravioletten Bereich (UV) aus.

Gegenstand der Erfindung ist auch ein Verfahren zur Vorbereitung eines Bogens, insbesondere eines Papierbogens, für einen nachfolgenden Falzprozess in einer Bogenfalzmaschine, insbesondere wie vorangehend beschrieben, oder in einem Umschlaganleger einer Buchbindemaschine. Erfindungsgemäß wird ein jeweiliger Bogen von einem Laser durch zumindest teilweises Vaporisieren, d.h. Verdampfen des Bogenmaterials gerillt und/oder geschnitten und/oder gestanzt. In vorteilhafter Weiterbildung kann der Laser dabei gepulst betrieben werden.

Die beschriebene Erfindung und die beschriebenen vorteilhaften Weiterbildungen der Erfindung stellen auch in beliebiger Kombination miteinander vorteilhafte Weiterbildungen der Erfindung dar.

Hinsichtlich weiterer Vorteile und vorteilhafter Ausgestaltungen der Erfindung wird auf die Unteransprüche sowie die Beschreibung eines Ausführungsbeispiels unter Bezugnahme auf die beiliegenden Zeichnungen verwiesen.

### Ausführungsbeispiel

Die Erfindung soll an Hand eines Ausführungsbeispiels noch näher erläutert werden. Es zeigen in schematischer Darstellung
- Fig. 1:: eine Falzmaschine mit einer ersten Ausführungsvariante des Bearbeitungswerkzeugs
- Figuren 2a und 2b:: einen Bogenanleger mit einer zweiten Ausführungsvariante
- Figuren 3a und 3b:: einen Bogenanleger mit einer dritten Ausführungsvariante

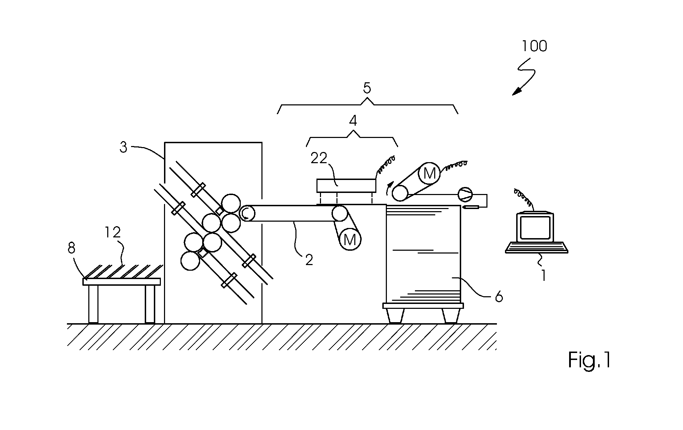

Figur 1 zeigt eine Bogenfalzmaschine 100 mit einem Anleger 5, einer nachfolgenden Falzstation 3 und einem nachfolgenden Ausleger 8 zum Auslegen der fertigen Signaturen 12. Ein jeweils oberster Bogen wird vom Bogenstapel 6 durch allgemein bekannte Vereinzelungseinrichtungen des Anlegers 5 angehoben und über eine Bogentransporteinrichtung 2 der Falzstation 3 zugeführt. Oberhalb der Bogentransporteinrichtung 2 ist eine Einrichtung 4 zur Bogenvorbereitung angeordnet. Diese weist in der hier dargestellten Variante ein Laserarray 22 auf, welches mit der Maschinensteuerung 1 datentechnisch verbunden ist. Während ein jeweiliger Bogen unterhalb des Laserarrays 22 entlang geführt wird, kann der Bogen mittels Laser bearbeitet, d.h. gerillt, gestanzt, perforiert oder beschnitten werden.

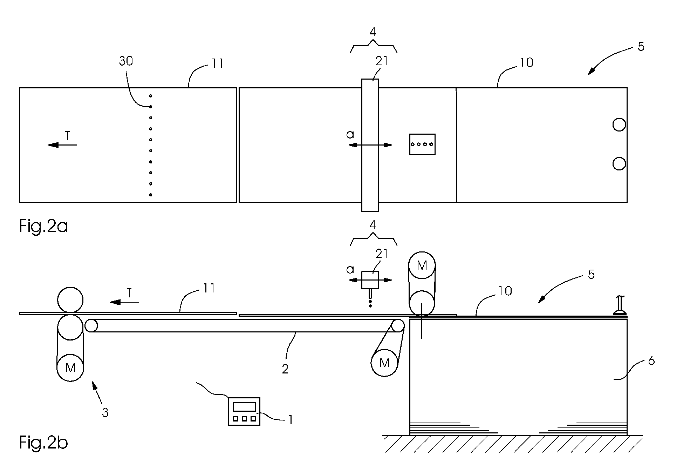

In den Figuren 2a und 2b ist eine zweite Ausführungsvariante dargestellt, in welcher die Einrichtung 4 zur Bogenvorbereitung eine oberhalb der Bogentransporteinrichtung 2 angeordnete Laserzeile 21 aufweist. Einzig ein auf dem Bogenstapel 6 befindlicher Bogen 10 wird durch den Anleger 5 vereinzelt und in Bogentransportrichtung T zu einer Falzstation 3 über die Bogentransporteinrichtung 2, dargestellt als Transporttisch, transportiert. Die Laserzeile 21 der Einrichtung 4 zur Bogenvorbereitung ist, wie durch den Doppelpfeil a dargestellt, in und entgegen der Bogentransportrichtung T verschieblich und kann durch eine nicht dargestellte Verschiebeeinrichtung mit der Transportgeschwindigkeit eines unterhalb der Laserzeile 21 befindlichen Bogens bewegt werden. Dadurch wird erreicht, dass für die Bearbeitung eines jeweiligen Bogens 10 durch die Laserzeile 21 ein größeres Zeitfenster zur Verfügung steht. Wie in Fig. 2a angedeutet, hat der Bogen 11 durch die Laserzeile 21 eine Bearbeitung 30 erfahren, nämlich eine Perforation.

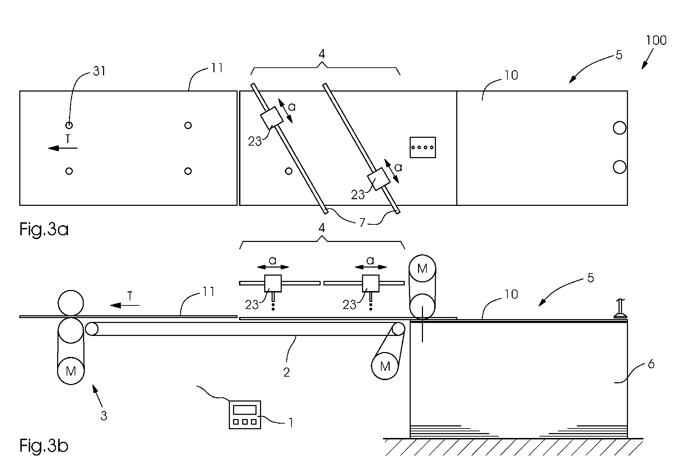

In den Figuren 3a und 3b ist eine alternative Ausführungsvariante der Einrichtung 4 zur Bogenvorbereitung dargestellt. Dabei umfasst diese zwei Einzellaserquellen 23, welche mittels einer Antriebsvorrichtung 7 Verschiebebewegungen a schräg zur Bogentransportrichtung T durchführen. Sowohl die einzelnen Laserquellen 23 als auch die Antriebsvorrichtungen 7 werden dabei von einer Maschinensteuerung 1 angesteuert. Ein Bogen 10, welcher in Anleger 5 vom Bogenstapel 6 vereinzelt und abgehoben wurde, wird mittels der Bogentransporteinrichtung 2 in Bogentransportrichtung T zur Falzstation 3 der Bogenfalzmaschine 100 transportiert. Während der Bogen 10 unter der Einrichtung 4 zur Bogenvorbereitung hindurch bewegt wird, erfährt er eine Bearbeitung durch die Einzellaserquellen 23. Im dargestellten Beispiel hat der Bogen 11 an vier Stellen Ausschnitte 31 erfahren.

Bei den zuvor beschriebenen Bearbeitungswerkzeugen 20 mit Laser, nämlich der Laserzeile 21, dem Laserarray 22 und den Einzellaserquellen 23 wird der Laser kurzpulsig betrieben und sendet eine Strahlung im ultravioletten Bereich aus.

### Bezugszeichenliste

- 1: Maschinensteuerung
- 2: Bogentransporteinrichtung
- 3: Falzstation
- 4: Einrichtung zur Bogenvorbereitung
- 5: Anleger
- 6: Bogenstapel
- 7: Antriebsvorrichtung
- 8: Ausleger

- 10: unbearbeiteter Bogen
- 11: bearbeiteter Bogen
- 12: Signatur

- 20: Bearbeitungswerkzeug mit Laser
- 21: Laserzeile
- 22: Laserarray
- 23: Einzel-Laserquelle

- 30: Beschnitt / Perforation
- 31: Ausschnitt (Stanzung)

- a: Verschiebebewegung
- T: Transportrichtung

- 100: Bogenfalzmaschine

## Patentansprüche

1. Bogenfalzmaschine (100) mit einer Maschinensteuerung (1), einer Bogentransporteinrichtung (2) zum Transportieren der Bogen (10, 11) in einer Bogentransportrichtung (T), mindestens einer Falzstation (3) und einer stromaufwärtig der mindestens einen Falzstation (3) angeordneten Einrichtung (4) zur Bogenvorbereitung, welche mindestens ein Bearbeitungswerkzeug (20) aufweist zur Bearbeitung eines jeweiligen Bogens (10) aus Papier oder Karton in Bewegung,
**dadurch gekennzeichnet,**
**dass** das mindestens eine Bearbeitungswerkzeug (20) einen Laser besitzt und der Laser eine Strahlung im ultravioletten Bereich (UV) ausstrahlt, insbesondere im UV-A, UV-B oder UV-C-FUV Bereich.

2. Bogenfalzmaschine nach einem der vorangehenden Ansprüche,
**dadurch gekennzeichnet,**
**dass** der Laser gepulst betreibbar ist, insbesondere kurzpulsig und es sich insbesondere um einen Picosekunden- oder Nanosekundenlaser handelt.

3. Bogenfalzmaschine nach einem der vorangehenden Ansprüche,
**dadurch gekennzeichnet,**
**dass** die Einrichtung (4) zur Bogenvorbereitung eine steuerbare Antriebsvorrichtung (7) besitzt zum Bewegen des mindestens einen Bearbeitungswerkzeuges in und entgegen der Bogentransportrichtung (T) und/ oder quer zur Bogentransportrichtung(T) .

4. Bogenfalzmaschine nach einem der Ansprüche 1-2,
**dadurch gekennzeichnet,**
**dass** das mindestens eine Bearbeitungswerkzeug (20) von einer Laserzeile (21) gebildet wird.

5. Bogenfalzmaschine nach einem der Ansprüche 1-2,
**dadurch gekennzeichnet,**
**dass** das mindestens eine Bearbeitungswerkzeug (20) von einem zweidimensionalen Laserarray (22) gebildet wird.

6. Bogenfalzmaschine nach einem der Ansprüche 1-2,
**dadurch gekennzeichnet,**
**dass** das mindestens eine Bearbeitungswerkzeug (20) eine Laserquelle aufweist und insbesondere einen ansteuerbaren, beweglichen Umlenkspiegel zum Leiten des Laserstrahls auf einen jeweiligen Bogen (10).

7. Verfahren zur Vorbereitung eines Bogens (10) aus Papier oder Karton für einen nachfolgenden Falzprozess in einer Bogenfalzmaschine (100), insbesondere nach einem der vorangehenden Ansprüche, oder in einem Umschlaganleger einer Buchbindemaschine;
**dadurch gekennzeichnet,**
**dass** ein jeweiliger Bogen (10) von einem Laser durch zumindest teilweises Vaporisieren des Bogenmaterials gerillt und/oder geschnitten und/oder gestanzt und/oder perforiert (30, 31) wird, wobei der Laser Strahlung im ultravioletten Bereich (UV) ausstrahlt.

8. Verfahren zur Vorbereitung eines Bogens nach Anspruch 7,
**dadurch gekennzeichnet,**
**dass** der Laser gepulst betrieben wird.
